Europäisches Patentamt

European Patent Office

Office européen des brevets

(19)

(11) Publication number: **0 038 601**

**B1**

(12) **EUROPEAN PATENT SPECIFICATION**

(45) Date of publication of patent specification:
**11.04.84**

(51) Int. Cl.³: **F 16 C 33/10, F 16 C 33/22**

(21) Application number: **81200427.3**

(22) Date of filing: **14.04.81**

(54) **A radial bearing.**

(30) Priority: **18.04.80 NL 8002279**

(43) Date of publication of application:
**28.10.81 Bulletin 81/43**

(45) Publication of the grant of the patent:
**11.04.84 Bulletin 84/15**

(84) Designated Contracting States:
**AT BE CH DE FR GB IT LI LU NL SE**

(56) References cited:
**DE - A - 2 142 031
FR - A - 1 546 285
FR - A - 1 546 372
US - A - 1 510 804
US - A - 2 663 599
US - A - 3 302 988
US - A - 3 981 547**

(73) Proprietor: **IHC HOLLAND N.V.
P.O. Box 208
NL-3350 AE Papendrecht (NL)**

(72) Inventor: **Visser, Teunis
Baanhoek 117
NL-3361 GB Sliedrecht (NL)**

(74) Representative: **van der Beek, George Frans et al,
Nederlandsch Octrooibureau Johan de Wittlaan
15 P.O. Box 29720
NL-2502 LS Den Haag (NL)**

Courier Press, Leamington Spa, England.

# A radial bearing

The invention relates to a radial bearing comprising a shaft having a helical groove, said groove having at least one flank which in a plane through the axis of the shaft extends at a small acute angle $\alpha$ with said axis, the opening of the said angle being in the advancing direction of the helix, which shaft is supported in a stationary cylindrical bush. Such a bearing design is known e.g. from the NL—PS—65,303. According to this known bearing design the shaft is rotating in a metal bush. Upon rotation the wedge-shaped space formed by the small angle provides for the formation of a lubricant wedge whereby the metal-metal-contact is prevented. This known bearing presents the drawback that the wedge angle is too large for the efficient build-up of a hydrodynamic lubricating film on the cylindrical part and that when at stand still a high specific pressure per surface unit occurs due to which the lubricating properties are bad upon starting up. Such a bearing may consequently be subjected to serious wearing phenomena due to thus caused erosion. Even under a normal load no proper lubrication may be achieved by means of this too large a wedge angle.

The object of the invention is to provide a bearing design not exhibiting these drawbacks.

According to the invention this object is achieved in that said bush consists of an elastomeric material which at least when the shaft is at rest is deformed by the grooved shaft.

Due to the load and the compression of the elastomeric bush caused thereby there will be formed very small wedge angles between the flanks of the groove and the surface of the bush whereby upon starting the rotation there will immediately be formed a lubricating film due to the formation of a very small angle between the flank and the bush.

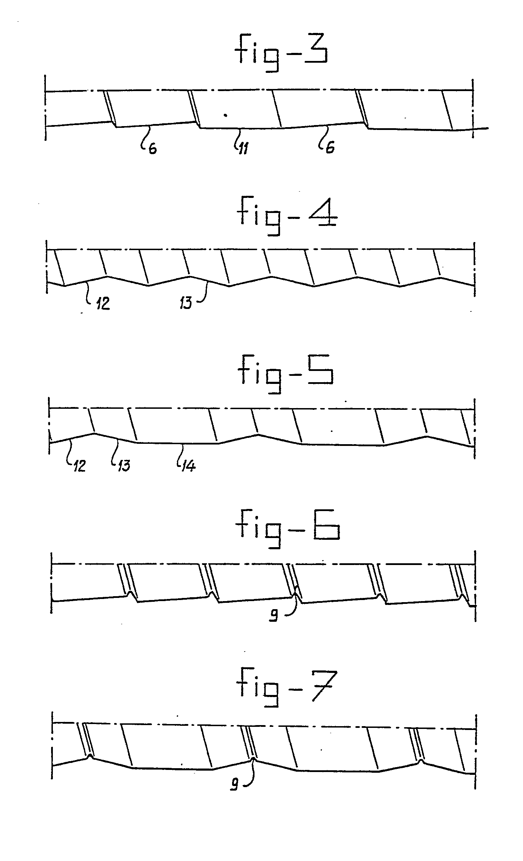

It is observed that from FR—A—1,546,285, in particular figures 3a, 3b a radial bearing is known having a stationary cylindrical bush made from rubber. This bush has helical grooves itself and the rotating shaft has no grooves. Furthermore from US—A—1,510,804 a radial bearing is known, in particular from figure 3, having a stationary cylindrical bush made from rubber supporting a rubber sleeve fixed to the shaft and provided with a helical groove the ridges of which engage the stationary bush with a cylindrical outer surface. As far as deformation of the bush occurs this is not a deformation which from the very beginning of rotation provides for a lubricant wedge.

In accordance with the invention both flanks of the groove may furthermore be at essentially the same though opposite angles with the axis. Thus it is achieved that the bearing is suitable for both directions of rotation.

It should be noted that it is known to use elastomeric materials in bearings utilizing water as the lubricant, in which bearing a smooth cylindrical shaft is supported by a bearing of elastomeric material, said bearing being composed of rods running in axial direction the effective surface of which rods somewhat tangents to the surface of the shaft. An example thereof has been shown in the U.S. Patent Specification 1,885,339.

The invention will now be elucidated in further detail with respect to the drawings, in which:

Fig. 1 diagrammatically shows a longitudinal section through the bearing according to the invention,

Fig. 2 represents a cross section along the line II—II in Fig. 1, and

Figs. 3, 4, 5, 6 and 7 diagrammatically show several profiles of the shaft in accordance with the bearing design of the invention.

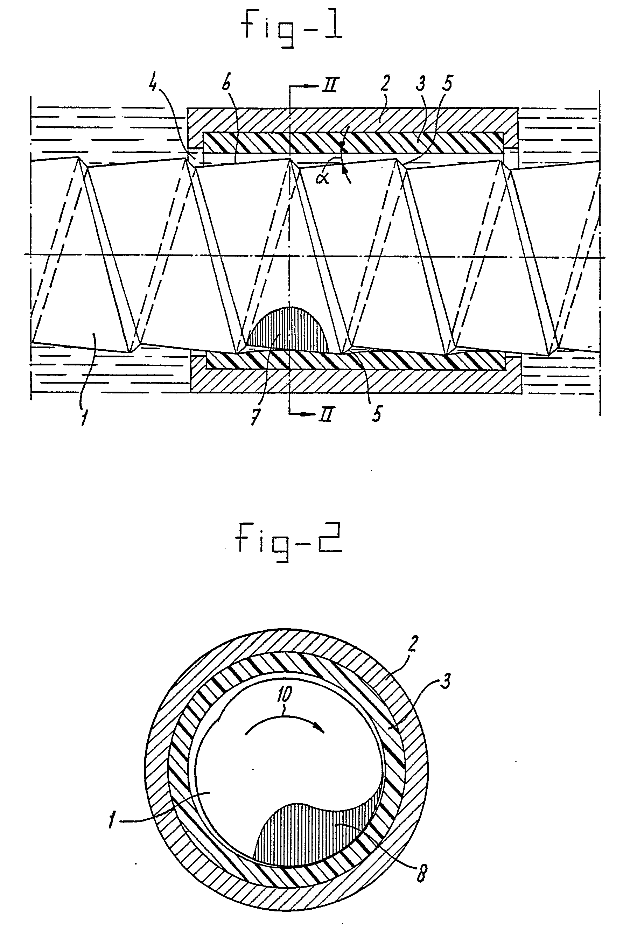

The bearing shown in Figs. 1 and 2 consists of a shaft 1, a metal bush 2 and a cylindrical bush 3 of elastomeric material, for instance rubber, supported by the metal bush.

The shaft 1 is provided with a helical groove having a steeply sloping flank 5 and a but slightly sloping flank 6. This flank 6 is at a very small angle with the axis of the shaft and consequently with the surface of the bush 3. This angle is in the axial direction and has been indicated in Fig. 1 by $\alpha$. It opens in the direction of the helix.

The flanks 5 and 6 determining the groove constitute a cavity that cannot be filled by the loaded elastomeric material. Under the influence of the rotation there is formed an elastohydrodynamic lubricating film extending from the rising flank 6 up to the next groove. This flank 6 should therefore have a small angle of inclination $\alpha$. The direction of rotation of the shaft runs like indicated by the arrow 10.

Like shown in Fig. 1 the elastomeric bush 3 is locked between the inwardly projecting end flanges of the metal bush 2. Such a locking in the axial direction is necessary because the helical groove will exert a propulsive action on the elastomeric material in the axial direction during rotation.

These end flanges project inwardly that far that they will not yet extend into the radial deformation range of the elastomeric bush, that is to say that they will remain outside the area in which the bush is deformed in stationary condition or in motion, respectively.

In tangential direction this small angle of inclination yields in combination with the pitch angle of the groove a yet smaller angle which together with the elastic deformation of the elastomeric bush yields a very small wedge angle in which the hydrodynamic build-up of pressure of the liquid occurs.

The hydrodynamic pressure course in the lubricating film in the axial direction has been indicated in Fig. 1 by the curve 7 and in Fig. 2 for the radial direction by the curve 8.

In the idle condition the elastomeric bush will be deformed in a way like indicated in Figs. 1 and 2 that is to say that the groove will almost entirely be filled with the elastomeric material. It has however been indicated clearly, that there will remain a wedge-shaped space. Upon rotation there will occur a displacement of this deformation in the circumferential direction and in the axial direction. Such change cannot quickly be followed by an elastomeric material responding slowly like a liquid material thus causing the filling of the groove to become less so that in other words the wedge angle becomes smaller.

The change in wedge angle however assures an adaptation of the lubrication to all circumstances varying from idle condition to maximum number of revolutions.

Where in the bearing according to the invention the grooves are provided in the rotating part there will occur an effective cooling of the running surface because at the location where loading occurs and where frictional heat will be generated there will take place a continuous renewal of the lubricating liquid. This cooling lubricating liquid will thereby automatically and continuously be replenished. Contaminations will moreover be removed continuously.

When it is desired to further improve upon the cooling and/or the flushing such may be acquired by providing an additional groove 9 like indicated in the Figs. 6 and 7.

With reference to Fig. 3 there is shown the same profile like in Fig. 1 in which however between the rising flanks 6 there has been arranged a cylindrical part 11. The intensity of the cooling is dependent on the number of threads passing per one revolution. By inserting a more or less broad cylindrical part 11 one may influence among others the degree of cooling.

Figs. 4 and 5 show a groove in which both the flanks 12 and 13 incline under the same small angle through in opposite directions. In Fig. 5 there is inserted again a cylindrical part 14. This embodiment is suitable for both directions of rotation.

Fig. 6 shows the embodiment of Fig. 1 including the additional conveying groove 9 whereas Fig. 7 shows the embodiment of Fig. 5 likewise provided with an additional conveying groove 9.

The left hand or the right hand winding of the helical line is determined by the direction of conveyance which is desired for the pertaining bearing.

The nature of the lubricating agent is dependent on the stability of the materials used. Quite different materials are conceivable. Water however is preferred.

## Claims

1. A radial bearing comprising a shaft (1) having a helical groove, said groove having at least one flank (6) which in a plane through the axis of the shaft (1) extends at a small acute angle ($\alpha$) with said axis, the opening of the said angle being in the advancing direction of the helix, which shaft (1) is supported in a stationary cylindrical bush (3), characterized in that said bush (3) consists of an elastomeric material which at least when the shaft is at rest is deformed by the grooved shaft (1).

2. The bearing according to claim 1, characterized in that both flanks (12, 13) of the groove are at essentially the same though opposite angles with the axis of the shaft (1).

3. The bearing according to claim 1 or 2, characterized in that between the grooves a cylindrical part (11, 14) is provided.

4. The bearing according to claim 1, 2 or 3, characterized in that in the axil direction thereof the elastomeric bush (3) is locked between inwardly projecting end flanges (4) of a metal bush (2) supporting said elastomeric bush (3).

## Revendications

1. Palier radial comprenant un arbre (1) qui présente une rainure hélicoïdale, laquelle rainure présente au moins un flanc (6) qui dans un plan passant par l'axe de l'arbre (1) fait un petit angle aigu ($\alpha$) avec cet axe, l'ouverture dudit angle étant dans le sens d'avancement de l'hélice et l'arbre (1) étant supporté dans un coussinet cylindrique fixe (3), caractérisé en ce que le coussinet (3) se compose d'une matière du genre élatsomère qui, tout au moins lorsque l'arbre est au repos, se trouve déformée par l'arbre rainuré (1).

2. Palier selon la revendication 1, caractérisé en ce que les deux flancs (12, 13) de la rainure font des angles sensiblement égaux mais opposés avec l'axe de l'arbre (1).

3. Palier selon la revendication 1 ou 2, caractérisé en ce qu'il est prévu entre les rainures une partie cylindrique (11, 14).

4. Palier selon la revendication 1, 2 ou 3, caractérisé en ce que dans la direction axiale de ce dernier le coussinet (3) en élastomère est assujetti entre des brides terminales (4), faisant saillie vers l'intérieur, d'un manchon métallique (2) supportant le coussinet (3) en élastomère.

## Patentansprüche

1. Radiallager, mit einer Welle (1), die eine Spiralnut aufweist, welche mindestens eine Flanke (6) besitzt, die sich in einer durch die Achse der Welle (1) gehenden Ebene unter einem kleinen spitzen Winkel ($\alpha$) zu der Achse erstreckt, wobei sich der Winkel in der Vorschubrichtung der Spirale öffnet und die Welle (1) in einer festehenden Zylinderhülse (3) gelagert ist, dadurch gekennzeichnet, daß die Hülse (3) aus einem Elastomermaterial besteht, das von der mit Nuten versehenen Welle (1) zumindest dann verformt wird, wenn die Welle stillsteht.

2. Lager nach Anspruch 1, dadurch gekennzeichnett, daß beide Flanken (12, 13) der Nut in bezug auf die Achse der Welle (1) im wesentlichen gleich große, jedoch entgegengesetzte Winkel aufweisen.

3. Lager nach Anspruch 1 oder 2, dadurch gekennzeichnet, daß zwischen den Nuten ein zylindrischer Abschnitt (11, 14) vorgesehen ist.

4. Lager nach Anspruch 1, 2 oder 3, dadurch gekennzeichnet, daß die aus Elastomermaterial bestehende Hülse (2) in ihrer axialen Richtung zwischen nach innen vorspringenden Endflanschen (4) einer die aus elastomerem Material bestehende Hülse (3) lagernden Metallhülse (2) verriegelt ist.

# Fig-1

# Fig-2

# fig-3

# fig-4

# fig-5

# fig-6

# fig-7